Europäisches Patentamt

European Patent Office

Office européen des brevets

(19)

(11) Veröffentlichungsnummer : **0 121 238**
**B1**

(12) **EUROPÄISCHE PATENTSCHRIFT**

(45) Veröffentlichungstag der Patentschrift :
16.06.87

(21) Anmeldenummer : 84103446.5

(22) Anmeldetag : 28.03.84

(51) Int. Cl.⁴ : **H 04 Q 11/04, H 04 Q 3/54,
H 04 M 3/36**

(54) **Schaltungsanordnung für Fernmeldeanlagen, insbesondere Fernsprech-vermittlungsanlagen mit informationsverarbeitenden Schaltwerken und Einrichtungen zur Abwehr von Überbelastungen.**

(30) Priorität : 31.03.83 DE 3311972

(43) Veröffentlichungstag der Anmeldung :
10.10.84 Patentblatt 84/41

(45) Bekanntmachung des Hinweises auf die Patenterteilung : 16.06.87 Patentblatt 87/25

(84) Benannte Vertragsstaaten :
AT CH DE FR GB LI NL SE

(56) Entgegenhaltungen :
DE-A- 3 236 130
FR-A- 2 402 904
GB-A- 2 001 227
9th INTERNATIONAL TELETRAFFIC CONGRESS
(ITC), Oktober 1979, Seiten 1-7, Torremolinos, ES; P.
SOMOZA u.a.: " 'Dynamic processor overload
control' and its implementation in certain single-processor and multiprocessor SPC systems"
PATENTS ABSTRACTS OF JAPAN, Band 6, Nr. 132 (E-119)[1010], 17. Juli 1982
ELECTRONIC SWITCHING, 1983, Seiten 411-415, Elsevier Science Publishers B.V., Amsterdam, NL; Teil IV
"Call processing", Kapitel 1, Absatz 8, "Traffic supervision and load control"
IEEE TRANSACTIONS ON COMMUNICATIONS, Band
COM-30, Nr. 6, Juni 1982, Seiten 1369-1378, IEEE, New
York, US; B.K. PENNEY u.a.: "The software architecture for a large telephone switch"

(73) Patentinhaber : **Siemens Aktiengesellschaft Berlin
und München
Wittelsbacherplatz 2
D-8000 München 2 (DE)**

(72) Erfinder : **Daisenberger, Georg, Dipl.-Ing.
Kärtner-Platz 3
D-8000 München 21 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Durch die DE-A-3 236 130 ist bereits eine Schaltungsanordnung für Fernmeldeanlagen, insbesondere Fernsprechvermittlungsanlagen, bekannt geworden, mit zentralen und/oder teilzentralen informationsverarbeitenden Schaltwerken mit einer hinsichtlich der Informations-Verarbeitungskapazität begrenzten Leistungsfähigkeit. Ferner sind darin Einrichtungen zur Ermittlung der Informationsverarbeitungs-Verkehrsbelastung jeweils eines Schaltwerkes und zur Erkennung von Informations-Verarbeitungs-Verkehrsüberlastungen und mit einer Abwehr solcher Überlastungen dienenden Zählern vorgesehen, die durch die Verkehrsbelastung betreffende Steuersignale beeinflußt einen Grenzwert erreichen. In dieser bekannten Schaltungsanordnung vorgesehene Zähler werden nach Maßgabe von die Verkehrsbelastung betreffenden Steuersignalen vorwärtsgeschaltet und in regelmäßigen, der Informations-Verarbeitungskapazität gemäßen Zeitabständen rückwärtsgeschaltet. Die Steuersignale sind in diesem bekannten Falle Überlastsignale, die in einem zentralen informationsverarbeitenden Schaltwerk erzeugt werden und an teilzentrale Schaltwerke abgegeben werden, in denen sich die Zähler befinden. Die Zähler können auch in anderer Weise realisiert sein, als es in der genannten deutschen Offenlegungsschrift erläutert ist. Hierzu sei auf einen Vortrag hingewiesen, der auf dem « 9th INTERNATIONAL TELETRAFFIC CONGRESS (ITC) » im Okt. 1979 in Torremolinos/Spanien (Konferenzpapier ITC-9 von SOMOZA/GUERRERO 1-7) gehalten wurde.

Die genannte Offenlegungsschrift beschreibt Zähler in teilzentralen Schaltwerken. Diese Zähler werden mit Hilfe von Überlastsignalen gesteuert, die sie von dem zentralen informationsverarbeitenden Schaltwerk erhalten. Wie solche Überlastsignale erzeugt werden können, sagt das genannte Konferenzpapier.

Erfolgt nun eine Belastungsmessung an zentraler Stelle, z. B. in einem zentralen informationsverarbeitenden Schaltwerk, so steht in einem solchen eine große Menge von aktuellen Daten zur Verfügung, die gemeinsam zur Belastungsermittlung erfaßt werden. Hieraus ergibt sich im Hinblick auf die verschiedenen und teils unterschiedlichen Einzel-Belastungswerte, die erfaßt werden, auf der Basis einer statistischen Mittelung ein Ausgleich, wodurch die jeweils ermittelten Belastungswerte den jeweils tatsächlich vorliegenden Belastungszustand relativ gut, d. h. genau genug anzeigen. Ein solcher Effekt der statistischen Mittelung ist jedoch nicht grundsätzlich gegeben. Weicht die tatsächlich vorliegende Verkehrsbelastung von den jeweils ermittelten Belastungswerten ab, so kann dies zur Überlastung von Schaltwerken und Funktionsstörungen oder zu einer mangelhaften Auslastung eines Schaltwerkes, also zu einer schlechten Ausnutzung seiner Verarbeitungskapazität führen.

Die Erfindung bezieht sich auf eine Schaltungsanordnung ähnlicher Art, und zwar auf eine Schaltungsanordnung für Fernmeldeanlagen, insbesondere Fernsprechvermittlungsanlagen ; mit zentralen und/oder teilzentralen informationsverarbeitenden Schaltwerken mit einer hinsichtlich der Informations-Verarbeitungskapazität begrenzten Leistungsfähigkeit, und mit Einrichtungen zur Ermittlung der Informationsverarbeitungs-Verkehrsbelastung jeweils eines Schaltwerkes und zur Erkennung von Informationsverarbeitungs-Verkehrsüberlastungen und mit einer Abwehr solcher Überlastungen dienenden Zählern, die durch die Verkehrsbelastung betreffende Steuersignale beeinflußt einen Grenzwert erreichen und in denen bei Überschreitung eines solchen Grenzwertes aufgrund von von ihnen aufgenommenen Steuersignalen ein zeitlich begrenztes Überlastkriterium besteht und von ihnen zur Überlastabwehr abgegeben wird (gleiche Priorität und gleiches Anmeldedatum weisen die einen ähnlichen Sachverhalt betreffenden EP-A-84 103 442, EP-A-84 103 444, EP-A-84 103 445 und EP-A-84 103 447 auf).

Eine Schaltungsanordnung dieser Art ist bereits durch « Patents Abstracts of Japan, Bd. 6, Nr. 132, 1982 » bekannt. Trotz der Tatsache, daß in dieser bekannten Schaltungsanordnung bei Überschreitung des genannten Grenzwertes aufgrund eines von einem Zähler aufgenommenen Initial-Schaltkennzeichens ein Überlastkriterium durch den betreffenden Zähler für einen bestimmten Zeitraum gegeben ist, besteht bei dieser bekannten Schaltungsanordnung ebenfalls das Problem, daß die Belastungs-Ermittlung die Tatsache unberücksichtigt läßt, daß die den genannten Zählern zugeführten Werte Einzel-Belastungswerte repräsentieren, die hinsichtlich der pro Informationsverarbeitungsauftrag jeweils anstehenden Informationsverarbeitungs-Verkehrsbelastung quantitativ stark voneinander abweichen.

Für die Erfindung besteht die Aufgabe, die Qualität der Belastungsmessung bei informationsverarbeitenden Schaltwerken von dem Effekt der statistischen Mittelung unabhängig zu machen und hinsichtlich der Ausnutzung der Verarbeitungskapazität optimale Voraussetzungen für die Überlastabwehr zu schaffen.

Die Erfindung löst die gestellte Aufgabe dadurch, daß die Steuersignale Initial-Schaltkennzeichen, insbesondere Belegungssignale — vorzugsweise Belegungssignale verbindungsindividueller Einrichtungen sind, die jeweils im Zusammenhang mit der Durchschaltung eines Teilabschnittes einer herzustellenden Verbindung ein entsprechendes Maß an für das betreffende Schaltwerk zu erwartender Informationsverarbeitungs-Verkehrsbelastung, insbesondere in Verbindung mit Aufnahme, Verarbeitung und/oder Abgabe von Informationen, signalisieren, daß für die verschiedenen Teilabschnitte durchzuschaltender Verbindungen bestimmte Maße typisch sind, die bei gleichartigen Teilabschnitten gleich, bei verschiedenen Teilabschnitten aber unterschiedlich sind, und daß die den Zählern zugeführten Initial-Schaltkennzeichen entsprechend den unterschiedlichen Maßen an Schaltwerks-Belastung, die jeweils von einem Initial-Schaltkennzeichen signalisiert wird, unterschiedliche Wertigkeiten haben und demgemäß die Zähler jeweils entsprechend unterschiedlich steuern, und daß bei Überschreitung eines Grenzwertes aufgrund eines von einem Zähler aufgenommenen Initial-Schaltkennzeichens ein Überlastkriterium durch den Zähler für einen Zeitraum besteht, dessen Dauer durch die jeweilige Wertigkeit dieses Initial-Schaltkennzeichens bestimmt ist.

Durch die Erfindung ist die Möglichkeit geschaffen, die Verkehrsbelastung sehr wirklichkeitsgetreu zu erfassen und eine Überlastabwehr optimal dahingehend zu gestalten, daß Verlust an Verarbeitungskapazität bedeutende Unterbelastungen sowie Störungen und Verarbeitungsfehler verursachende Überbelastungen vermieden werden. Dabei können die den Zählern zugeführten Werte stark voneinander abweichende Einzel-Belastungswerte repräsentieren, und eine Belastungsermittlung an dezentraler Stelle verursacht keine Probleme hinsichtlich der Ermittlungsgenauigkeit, wenngleich hierbei der Effekt der statistischen Mittelung entfällt.

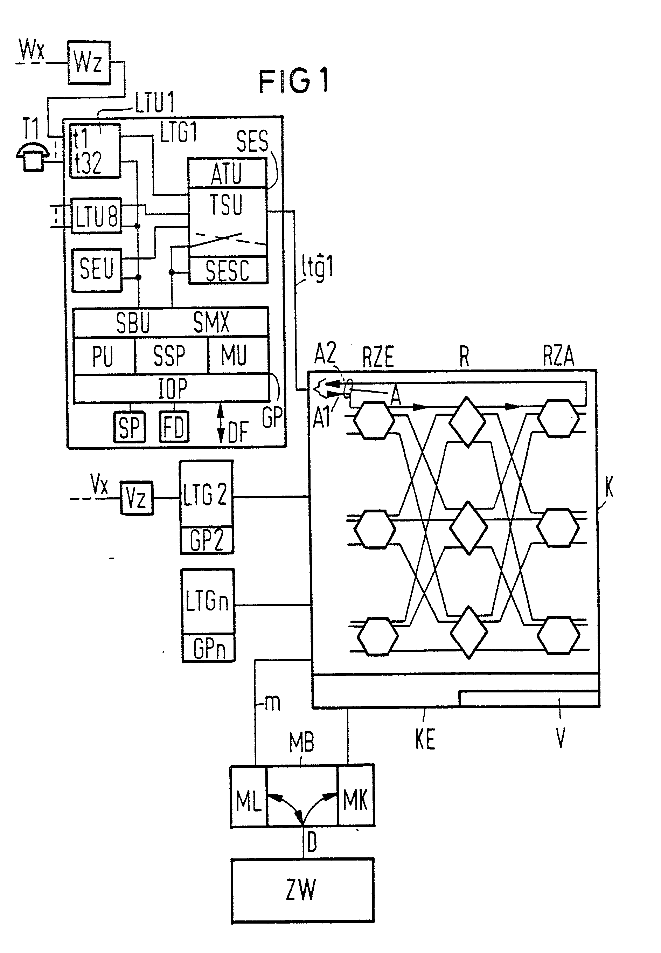

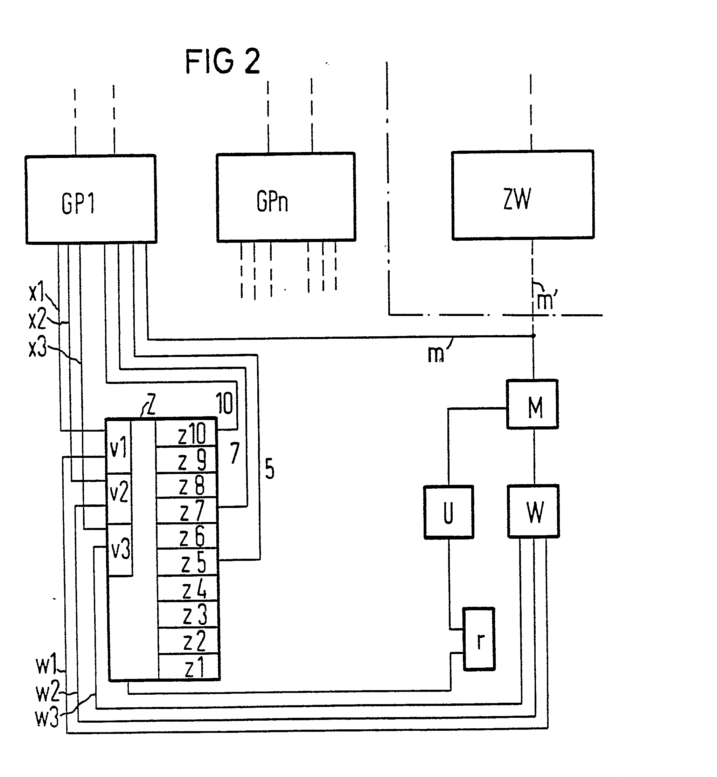

In Fig. 1 und 2 der Zeichnungen ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäß arbeitenden PCM-Fernsprechvermittlungsanlage nach Fig. 1 ein. Erst weiter unten werden die erfindungsgemäßen Besonderheiten dieser Vermittlungsanlage zusätzlich anhand von Fig. 2 erläutert.

Ein in drei Koppelstufen RZE, R und RZA aufgebautes Koppelfeld weist eingangsseitig eine größere Anzahl von Koppelfeldanschlüssen auf, von denen einer dargestellt und mit A bezeichnet ist. Das Koppelfeld besteht aus mehreren Koppelfeldteilen. Jeder der Koppelfeldanschlüsse umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung A1 und eine Zeitmultiplexleitung A2. Für jede dieser beiden Zeitmultiplexleitungen ist die jeweilige Signalübertragungsrichtung durch entsprechende Pfeile angedeutet.

Die Koppelvielfache der ersten Koppelstufe RZE sind kombinierte Zeitlagen-Raumlagen-Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, z. B. A des Koppelfeldteiles K, sind über für jeweils beide Nachrichtenübertragungsrichtung ausgelegte Zeitmultiplexleitungen, z. B. die Zeitmultiplexleitung ltg1, Anschlußgruppen, z. B. die Anschlußgruppe LTG1 (Line Trunk Group), einzeln angeschlossen. Eine solche Anschlußgruppe ist eingangsseitig mit Teilnehmerleitungen (analog), Analog-Verbindungsleitungen und mit PCM-Verbindungsleitungen (alternativ sowie auch in Kombination) beschaltbar. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktionen erforderlichen Einrichtungen enthalten (vgl. NTZ Bd. 33/ 1980, Heft 10, Seiten 646 bis 652 und 1978 International Zurich Seminar on Digital Communications, Proccedings IEEE Catalogue, Nr. 78 CH 1325-0 ASST, Seiten B2-1, A4.1, auch die DE-A-31 00 811 DE-A-31 04 002 und DE-A-31 06 903).

In der Zeichnung ist unter anderem die Anschlußgruppe LTG1 gezeigt. Deren Aufbau und Arbeitsweise sind ausführlich in der DE-A-28 26 113 ab Seite 6 unten beschrieben. Ferner sei auf das Beiheft zum 4. Jahrgang (1981) der Zeitschrift « telcom report » hingewiesen. Die weiteren Erläuterungen setzen diese Beschreibungen als bekannt voraus und beschränken sich auf die im vorliegenden Falle besonders wesentlichen Zusammenhänge.

Ein zentrales Steuerwerk ZW dient unter anderem zur Herstellung der über das Koppelfeld aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenen Koppelvielfache und Zwischenleitungen, sowie die darin jeweils belegten Kanäle. Diese Vermittlungsdaten werden mit Hilfe des Zentralsteuerwerkes, das also u. a. auch die Funktion einer Wegesucheinrichtung nebst Belegungsspeicher ausübt, erarbeitet und zur Koppelfeldeinstelleinrichtung KE des Koppelfeldes K übertragen. Der die Vermittlungsdaten übertragende Datenfluss vom Zentralsteuerwerk ZW zur Koppelfeldeinstelleinrichtung KE verläuft über eine mit dem Zentralsteuerwerk über eine zentrale Datenleitung D verbundene Puffereinrichtung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist z. B. in der DE-PS 15 37 849 ausführlich beschrieben.

Außer dem zentralen Steuerwerk ZW ist eine größere Anzahl von dezentralen Steuereinrichtungen GP1 bis GPn dargestellt, die jeweils den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber können der bereits angegebenen DE-A-28 26 113 entnommen werden.

Die dezentralen Steuereinrichtungen GP1 bis GPn stehen mit dem zentralen Steuerwerk ZW über Datenkanäle in Verbindung, die einzeln pro dezentrale Steuereinrichtung über das Koppelfeld (K) bis zur Puffereinrichtung MB durchgeschaltet sind. Von dieser Puffereinrichtung, und zwar von ihrem Datenkopf ML, führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlußgruppen LTG1 bis LTGn. Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfaßt. Die Zeitmultiplexeinrichtung m ist also an einen Koppelfeldanschluß wie den mit A bezeichneten angeschaltet.

Jede Datenverbindung zwischen dem Datenkopf einer Puffereinrichtung und einer jeden der Anschlußgruppen, z. B. der Anschlußgruppe LTG1, umfaßt einen Kanal zur Übertragung von Daten von der Puffereinrichtung zur betreffenden Anschlußgruppe und einen weiteren Kanal zur Übertragung von Daten in der umgekehrten Richtung. Diese beiden Datenkanäle führen zu und von der der betreffenden Anschlußgruppe individuell zugeordneten dezentralen Steuereinrichtung.

Die Herstellung und die Aufrechterhaltung der erläuterten Datenverbindungen über das Koppelfeld K erfolgt mit Hilfe der Koppelfeldeinstelleinrichtung KE in der gleichen Weise wie die Herstellung und die Aufrechterhaltung von Nachrichtenverbindungen, z. B. Fernsprechverbindungen. Hierzu sind in an sich bekannter Weise den Koppelvielfachen des Koppelfeldes K Haltespeicher zugeordnet, in die die jeweils ein Koppelvielfach betreffenden Vermittlungsdaten eingespeichert werden. Mit Hilfe dieser Haltespeicher wird bewerkstelligt, dass in den jeweiligen Zeitlagen die erforderlichen Durchschaltungen zur Verfügung stehen bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u. a. ein Datenkopf MK, der der Puffereinrichtung MB zugeordnet ist. Der Vollständigkeit halber sei an dieser Stelle hinzugefügt, dass mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines grösseren Koppelfeldes zugeordnet sein. Es ist auch möglich, je eine Koppelfeldeinstelleinrichtung pro Koppelstufe vorzusehen.

Da die weiter oben beschriebenen Datenverbindungen zwischen der Puffereinrichtung MB über die Zeitmultiplexleitung m zu jeder der Anschlussgruppen LTG1 bis LTGn mit Hilfe des Koppelfeldes K durchgeschaltet sein müssen, bevor der Aufbau von Nachrichtenverbindungen, z. B. Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, dass die Koppelfeldeinstelleinrichtung KE ausserdem in einem ihr zugeordneten Speicher V Einstelldaten, d. h. also die Vermittlungsdaten, für die Datenkanäle gespeichert enthält. Diese Vermittlungsdaten brauchen also bei einem Neuaufbau der Datenverbindungen nicht jeweils vom zentralen Steuerwerk ZW neu erarbeitet zu werden und nicht über die Puffereinrichtung MB erneut übertragen zu werden. Sind die zwischen der Puffereinrichtung MB und den Anschlussgruppen LTG1 bis LTGn, d. h. ihren dezentralen Steuereinrichtung GP1 bis GPn, erforderlichen Datenverbindungen über das Koppelfeld K neu herzustellen, so gibt das zentrale Steuerwerk ZW lediglich einen entsprechenden Befehl an die Puffereinrichtung MB ab, den sie an die Koppelfeldeinstelleinrichtung KE weitergibt, und aufgrund deren diese die in ihrem Speicher V gespeicherten Vermittlungsdaten entnimmt, um in an sich bekannter Weise die erforderlichen Vermittlungsvorgänge einzeln nacheinander auszuführen.

Nachdem die bisherige Beschreibung die erfindungsgemäss gestaltete Zeitmultiplex-Fernsprechvermittlungsanlage in allgemeineren Zusammenhängen beschrieben hat, wendet sie sich nunmehr den erfindungsgemässen Zusammenhängen zu.

Wie in der bereits genannten DE-A-2 826 113 erläutert ist, werden über den Zeitkanalkoppler TSU der Anschlussgruppe LTG1 ausser Nachrichtenverbindungen von und zu Teilnehmerstellen sowie Verbindungsleitungen auch die bereits erwähnten Datenverbindungen zwischen den den Anschlussgruppen, z. B. LTG1, zugeordneten dezentralen Steuereinrichtungen, z. B. GP, einerseits und dem zentralen Steuerwerk ZW andererseits hergestellt. Diese Datenverbindungen verlaufen, wie bereits dargelegt, weiterhin über das Koppelfeld K und die Zeitmultiplexleitung m.

Wie bereits ausgeführt wurde, sind die Gruppensteuerwerke GP1 bis GPn dezentrale oder teilzentrale Steuereinrichtungen im Vergleich zum zentralen Steuerwerk ZW. Insgesamt werden diese teilzentralen Steuerwerke und das zentrale Steuerwerk auch aus Schaltwerke bezeichnet. Die Gruppensteuerwerke und das zentrale Steuerwerk weisen eine hinsichtlich der Informationskapazität begrenzte Leistungsfähigkeit auf. Ein besonderes Problem stellt die Leistungsfähigkeit des zentralen Steuerwerkes dar.

Wie ebenfalls bereits angedeutet wurde, ist außer dem zentralen Koppelfeld K eine Anzahl von Anschlußgruppen LTG1 bis LTGn vorgesehen. Jede dieser Anschlußgruppen ist je über eine PCM-Leitung, z. B. LTG1, an einen Eingang des Koppelfeldes K in der beschriebenen Weise angeschlossen. Diese PCM-Leitung pro Anschlußgruppe führt innerhalb derselben zu einer Durchschalteeinrichtung TSU, deren Bedeutung und Funktionsweise in der bereits genannten DE-A-2 826 113 genauer beschrieben wird. Bei dieser Durchschalteanordnung handelt es sich um ein Teilkoppelfeld, über das sowohl die genannten Datenverbindungen als auch die Verbindungen von und zu Teilnehmern und von und zu Verbindungsleitungen durchgeschaltet werden. Unter « Verbindungsleitungen » sind selbstverständlich auch Kanäle von angeschlossenen PCM-Verbindungsleitungen zu verstehen. Der Anschluß dieser Teilnehmerleitungen, Verbindungsleitungen und Kanäle ist den bereits genannten Literaturstellen zu entnehmen.

Über eingangsseitig an eine Anschlußgruppe angeschlossene Teilnehmerleitungen, Verbindungsleitungen und Kanäle treffen verschiedenerlei Informationen ein, z. B. Anrufsignale von Teilnehmerstationen, die eine Verbindung herzustellen wünschen, ferner Wahlkennzeichen von diesen Teilnehmerstellen, aber auch über Verbindungsleitungen und Kanäle, ferner Leitungszeichen über Verbindungsleitungen sowie in Zuordnung zu Kanälen. Das Gruppensteuerwerk dient in an sich bekannter Weise zur Abwicklung der Aufnahme solcher eintreffender verbindungsindividueller Informationen. Ein Gruppensteuerwerk nimmt außerdem eine Verarbeitung oder eine Vorverarbeitung dieser aufgenommenen Informationen jeweils in Zuordnung zu der betreffenden Teilnehmerleitung, Verbindungsleitung oder zu dem betreffenden Kanal vor. Außerdem werden einige solcher Informationen in dem dem Gruppensteuerwerk jeweils individuell zugeordneten Speichern SP zwischengespeichert und zwar mit Hilfe einer Eingabe-Ausgabe-Einrichtung IOP. Ferner hat das Gruppensteuerwerk die Aufgabe, Signale und Steuersignale über diese Leitungen (Teilnehmerleitungen und Verbindungsleitungen, sowie Kanäle) zur Aussendung zu bringen, z. B. Rufwechselstromimpulse, Hörtonsignale, Wahlkennzeichen sowie Leitungszeichen und dergleichen.

Über das einer Anschlußgruppe zugehörige Teilkoppelfeld werden Verbindungen hinsichtlich der Verbindungsaufbaurichtung sowohl ankommend von einer Leitung (Teilnehmerleitung, Verbindungsleitung bzw. ein entsprechender Kanal) zum zentralen Koppelfeld K hin als auch von diesem abgehend zu einer solchen Leitung durchgeschaltet. Bei einer Verbindungsherstellung erfolgt zunächst eine Durchschaltung z. B. von einer Teilnehmerleitung über die betreffende Anschlußgruppe zum zentralen Koppelfeld K. Die für die weitere Durchschaltung der betreffenden Verbindung über dieses Koppelfeld erforderlichen Daten werden vom Gruppensteuerwerk über die betreffende, bereits erwähnte Datenverbindung zum Zentralsteuerwerk ZW übertragen. Die weitere Verbindungsdurchschaltung erfolgt über eine Anschlußgruppe (gegebenenfalls dieselbe Anschlußgruppe, in der Regel aber eine andere Anschlußgruppe) wozu das betreffende Gruppensteuerwerk der jeweiligen Anschlußgruppe tätig werden muß.

Für ein Gruppensteuerwerk gibt es also hinsichtlich der Verbindungsaufbaurichtung Durchschaltevorgänge verschiedener Art, und zwar einerseits Durchschaltungen von einer Teilnehmerleitung oder Verbindungsleitung (oder einem entsprechenden Kanal) zum Koppelfeld K hin und andererseits Durchschaltungen in umgekehrter Richtung. Die Durchschaltungen über ein Teilkoppelfeld unterscheiden sich außerdem in solche von und zu Teilnehmerleitungen einerseits und von und zu Verbindungsleitungen (bzw. Kanälen) andererseits. Die im Zusammenhang dieser jeweils beiden pro Verbindung erforderlichen Durchschaltevorgänge durchgeführten Informationsaufnahmevorgänge und/oder Informationsabgabevorgänge nehmen wenigstens je einmal pro Durchschaltevorgang das jeweilige Gruppensteuerwerk in Anspruch. Die jeweilige Art der Durchschaltung (ankommend oder abgehend) von oder zu Teilnehmerleitung oder Verbindung ist maßgebend für die mit der jeweiligen Inanspruchnahme des Gruppensteuerwerks zwangsläufig verbundene Informationsverarbeitungs-Verkehrsbelastung pro Durchschaltevorgang — wie bereits ausgeführt wurde, werden von den Gruppensteuerwerken die Informationen, die sie im Zusammenhang mit einem Durchschaltevorgang aufnehmen, unverändert oder vorverarbeitet an das ihnen gemeinsame zentrale Steuerwerk weitergeleitet. Ebenso gibt auch das zentrale Steuerwerk Informationen an die Gruppensteuerwerke aus, um darin erforderliche abgehende Durchschaltungen durchzuführen und Signale und Steuersignale über die betreffenden Leitungen (Teilnehmerleitungen) und Verbindungsleitungen bzw. Kanäle) abzugeben. Die pro Verbindungsherstellung von einem Gruppensteuerwerk an das zentrale Steuerwerk zu übertragenden Informationen stellen also jeweils eine Informationsportion begrenzten Umfanges dar ; der jeweilige Umfang einer Informationsportion ergibt sich aus der jeweiligen Art der Verbindungsherstellung.

Jeder Anruf seitens einer Teilnehmerstelle und jede ankommende Belegung einer Verbindungsleitung (bzw. eines entsprechenden Kanales) erfordert also vom betreffenden Gruppensteuerwerk eine bestimmte Arbeitsleistung. Jede solche Arbeitsleistung wird anhand eines Initial-Schaltkennzeichens für das jeweilige Gruppensteuerwerk erkennbar. Ein solches Initial-Schaltkennzeichen ist bei einer Teilnehmerleitung mit Schleifenimpulsgabe z. B. der Schleifenschluß, der das Anrufsignal darstellt. Ein solches Initial-Schaltkennzeichen ist bei einer Verbindungsleitung z. B. das c-Ader-Belegungssignal bei ankommender Belegung. Entsprechendes gilt für verbindungsindividuelle Kanäle. Diese Initial-Schaltkennzeichen sind also voneinander verschieden, und zwar je nach der betreffenden Art von Leitung (Teilnehmerleitung oder Verbindungsleitung). Im Zusammenhang mit der Durchschaltung eines Teilabschnittes einer herzustellenden Verbindung signalisieren sie jeweils ein entsprechendes Maß an für das betreffende Gruppensteuerwerk zu erwartender Informationsverarbeitungs-Verkehrsbelastung, insbesondere in Verbindung mit Aufnahme, Verarbeitung und/oder Abgabe von Informationen. Für die verschiedenen Teilabschnitte durchzuschaltender Verbindungen sind also bestimmte diesbezügliche Maße typisch, die bei gleichartigen Teilabschnitten einer durchzuschaltenden Verbindung gleich, bei verschiedenen Teilabschnitten aber unterschiedlich sind. Was für jedes der Gruppensteuerwerke gilt, gilt in entsprechender Weise auch für das zentrale Steuerwerk ZW. Je nach dem, ob es sich bei einer über das Koppelfeld K durchzuführenden Durchschaltung um eine Internverbindung, eine abgehende Fernverbindung oder eine ankommende Fernverbindung handelt, ist das Ausmaß der Informationsverarbeitungs-Verkehrsbelastung pro Durchschaltung für das zentrale Steuerwerk verschieden groß, und zwar je nach Art der jeweils herzustellenden Verbindung.

Die Beschreibung nimmt nun auch auf die Darstellung gemäß Fig. 2 Bezug. Hierin sind das Gruppensteuerwerk PP1 und GPn und das Zentralsteuerwerk ZW angedeutet, die auch in Fig. 1 dargestellt sind. Dem Gruppensteuerwerk GP1 ist ein Zähler Z zugeordnet. Entsprechendes gilt für die übrigen Gruppensteuerwerke. Jedes Mal, wenn ein Gruppensteuerwerk für eine Informationsaufnahme bei Anruf seitens eines Teilnehmers, der eine Verbindung herzustellen wünscht, in Anspruch genommen wird, oder wenn eine Verbindungsleitung (bzw. ein Kanal) ankommend belegt wird, zwecks Durchschaltung einer Verbindung über das dem Gruppensteuerwerk entsprechende Teilkoppelfeld und das Gruppensteuerwerk für die Aufnahme von Wahlkennzeichen in Anspruch genommen wird, sowie für die Abwicklung der Durchschaltung über das betreffende Teilkoppelfeld oder wenn eine Durchschaltung vom Koppelfeld zu einer abgehenden Verbindungsleitung (bzw. einem Kanal) oder zu einer Teilnehmerleitung hin durchzuführen ist und hierzu entsprechende Informationen vom Zentralsteuerwerk entgegenzunehmen sind, entsteht in dem betreffenden Gruppensteuerwerk ein Initial-Schaltkennzeichen, welches immer ein nachfolgendes Eintreffen einer zu verarbeitenden Information ankündigt.

Ein Gruppensteuerwerk gibt nun immer bei Vorliegen eines solchen Initial-Schaltkennzeichens ein Steuersignal an den ihm zugeordneten Zähler Z ab, und zwar über eine der Steuerleitungen x1, x2 oder x3. Je nach dem, welcher Art die dem Gruppensteuerwerk anschließen erwachsende Informationsverarbeitungs-Verkehrsbelastung ist, wird das Steuersignal über die Steuerleitung x1 oder die Steuerleitung x2 oder die Steuerleitung x3 vom Gruppensteuerwerk zum Zähler Z gegeben. Mit Hilfe dieser Steuerzeichen wird der Zähler Z um einige Schritte vorwärtsgeschaltet. Die Vorwärtsschaltung und eine Rückwärtsschaltung des Zählers hat jeweils zur Folge, daß eines seiner Zählglieder z1 bis z10 markiert ist. Bei Vorwärtsschaltung des Zählers schreitet die Markierung in aufsteigendem Sinne hinsichtlich der Nummerierung der Bezeichnungen der Zählglieder fort und bei Rückwärtsschaltung schreitet die Markierung in entgegengesetztem Sinne fort. Die Anzahl der Schritte, um die der Zähler Z bei jedesmaligem Erhalt eines Initial-Schaltkennzeichens vorwärtsgeschaltet wird, hängt u. a. ab von dem jeweiligen Maß an für das Gruppensteuerwerk zu erwartender Informationsverarbeitungs-Verkehrsbelastung. Demgemäß trifft das Initial-Schaltkennzeichen jeweils über eine bestimmte der Steuerleitungen x1 bis x3 ein, wodurch die Zahl der Vorwärtsschritte für den Zähler Z mitbestimmt ist. « Mitbestimmt » bedeutet hier, daß die Anzahl der Vorwärtsschritte bei Eintreffen eines Initial-Schaltkennzeichens nicht alleine davon abhängig ist, über welche der Steuerleitungen x1 bis x3 das Initial-Schaltkennzeichen eintrifft. Sondern hierfür ist außerdem auch noch eine über Wertigkeitsleitungen w1 bis w3 übertragene Wertigkeitsangabe maßgebend.

Der Zähler Z eines Gruppensteuerwerkes dient zur Ermittlung der Informationsverarbeitungs-Verkehrsbelastung des jeweiligen Gruppensteuerwerkes, zur Erkennung von Informationsverarbeitungs-Verkehrsüberlastungen und zur Abwehr solcher Überlastungen. Da nun alle Verbindungen nicht nur über ein Teilkoppelfeld sondern immer auch über das zentrale Koppelfeld durchgeschaltet werden, hat jede Inanspruchnahme eines Gruppensteuerwerks auch eine Inanspruchnahme des zentralen Steuerwerks zur Folge. Folglich betrifft die Ermittlung der Informationsverarbeitungs-Verkehrsbelastung jeweils eines Gruppensteuerwerkes, die Erkennung von Informationsverarbeitungs-Verkehrsüberlastungen für dieses Gruppensteuerwerk und die Abwehr solcher Überlastungen von diesem Gruppensteuerwerk zugleich auch die Informationsverarbeitungs-Verkehrsbelastung des zentralen Steuerwerks, Informationsverarbeitungs-Verkehrsüberlastungen für dasselbe und die Abwehr solcher Überlastungen von dem zentralen Steuerwerk. Denn die diesbezügliche Zählereinstellung der Zähler jedes der Gruppensteuerwerke (Abwehr von Überlastungen) wirkt sich auch in der Informations-Verkehrsbelastung des zentralen Steuerwerkes aus und trägt jeweils zur Abwehr solcher Überlastungen vom zentralen Steuerwerk bei. Bekanntlich stellt bei einem Zusammenspiel von Gruppensteuerwerken und einem zentralen Steuerwerk dessen Informationsverarbeitungs-Verkehrsbelastung den typischen Engpaß dar ; von besonderer Wichtigkeit ist deshalb die Abwehr von Informationsverarbeitungs-Verkehrsüberbelastungen vom zentralen Steuerwerk.

Für die Gruppensteuerwerke und für das zentrale Steuerwerk wurde bisher auch der gemeinsame Begriff « Schaltwerke » benutzt, anschließend gemeinsam auch als « Steuerwerke » bezeichnet. Die Belastbarkeit eines jeden solchen Steuerwerkes hängt grundsätzlich von seinem Aufbau (Struktur und Programmabwicklung) und von der Art und dem Umfang der ihm laufend übertragenen Informationsverarbeitungsvorgänge ab. Die Erfahrung lehrt nun, daß z. B. die Zusammensetzung von Informationsverarbeitungsvorgängen verschiedener Art sich während des Betriebes eines Steuerwerkes verschieben kann. So kann es z. B. sein, daß zu bestimmten Tageszeiten überwiegend Ortsverbindungen herzustellen sind, während zu bestimmten anderen Tageszeiten überwiegend Fernverbindungen herzustellen sind. Ferner kann es sein, daß zu bestimmten Tageszeiten mehr Kurzzeitgespräche stattfinden und zu anderen Tageszeiten mehr Langzeitgespräche. Ferner kann es sein, daß zu bestimmten Tageszeiten mehr Sonderdienste in Anspruch genommen werden als zu anderen Tageszeiten. Folglich ist die Belastbarkeit eines solche Steuerwerks nicht konstant. Um ein Steuerwerk optimal auszulasten, ist es deshalb zweckmäßig, die zu den verschiedenen Betriebszeiten aufgrund der unterschiedlichen Voraussetzungen gegebenen Belastbarkeiten zu berücksichtigen. Deshalb ist es gebräuchlich, solche Steuerwerke mit Meßeinrichtungen zur Bestimmung der Belastbarkeit auszustatten, die die stets schwankende Belastung über Zeiträume integrieren, die jeweils groß genug sind, um ein Bestimmungsergebnis mit ausreichender Ergebnisgenauigkeit zu gewährleisten, also Kurzzeitschwankungen nicht zum Tragen kommen zu lassen. Eine solche Meßeinrichtung kann z. B. auf der Basis arbeiten, daß ein jedes Steuerwerk bei jeweiliger Abarbeitung sämtlicher vorliegender Informationsverarbeitungsaufträge ein Anforderungssignal erzeugt, das u. a. dieser Meßeinrichtung zugeführt wird. Diese Meßeinrichtung zählt nun über bestimmt Zeiträume hinweg, z. B. über eine Sekunde oder 5 Sekunden hinweg die Anzahl solcher aufgetretener Anforderungssignale im betr. Steuerwerk.

In Fig. 2 ist eine pro Gruppensteuerwerk (GP1-GPn) vorgesehene und mit diesen (über m) verbundene solche Meßeinrichtung mit M bezeichnet. Sie erhält über eine Meßleitung m das Anforderungssignal bei seinem jedesmaligen Auftreten. Die Meßeinrichtung zählt in an sich bekannter Weise die Anforderungssignale ab. Von einer zentralen Zeitgebereinrichtung r erhält sie über eine Untersetzereinrichtung U ein Beginnzeichen und ein Endezeichen, also zwei Zeitmarkierungen, die den Meßzeitraum markieren. Die Meßeinrichtung ermittelt nun die Anzahl der zwischen zwei solchen Zeitmarkierungen eintreffenden Anforderungssignale des jeweiligen Gruppensteuerwerkes. Sie überträgt diese Anzahl an eine Vergleichseinrichtung W, in der ein Konstantwert gespeichert ist, mit dem die Vergleichseinrichtung die Angabe über die Anzahl von Anforderungssignalen vergleicht. Es sei angenommen, daß hinsichtlich der Belastbarkeit drei verschiedene Bestimmungsergebnisse vorgesehen sind. Diese Anzahl ist keineswegs bindend, sondern kann auch größer gewählt werden. Die Vergleichseinrichtung W gibt also nach Ablauf eines jeden Meßzeitintervalls der Meßeinrichtung M ein Bestimmungsergebnis bezüglich der Belastbarkeit des Steuerwerkes ab, das den tageszeitlichen Betriebsverhältnissen entspricht.

Eine Belastbarkeitmessung ist für jedes der Gruppensteuerwerke GP1 bis GPn einzeln vorgesehen. Es ist aber ebenso oder auch darüberhinaus möglich, eine solche Belastbarkeitsmessung für das zentrale Steuerwerk vorzusehen. Ferner kann vorgesehen werden, daß ein Belastbarkeitsmessung nur beim zentralen Steuerwerk vorgesehen wird, und daß die dabei gewonnenen Bestimmungsergebnisse in Form der Wertigkeitsangaben von einer dem zentralen Steuerwerk zugeordneten Meßeinrichtung an die den Gruppensteuerwerken zugeordneten Zähler Z abgegeben werden.

Das die tageszeitlich bedingte Belastbarkeit des jeweiligen Steuerwerkes betreffende und jeweils in der beschriebenen Weise laufend wiederholt ermittelte Bestimmungsergebnis ist ein dreifaches und besteht demgemäß immer aus drei verschiedenen Wertigkeitsangaben. Jede Wertigkeitsangabe kann — je nach der momentan gegebenen Belastbarkeit des Steuerwerkes (unter « Belastbarkeit » sei hier die Anzahl der pro Meßzeitraum von dem betreffenden Steuerwerk abwickelbaren Arbeitsvorgänge, z. B. Rechenoperationen, Steuerungsvorgänge u. dgl., verstanden) — verschiedene Werte annehmen. Für die Übertragung jeder der drei Wertigkeitsangaben sind drei einzelne Wertigkeitsleitungen w1 bis w3 vorgesehen, über die diese Wertigkeitsangaben zu drei Wertigkeitsspeichergliedern v1 bis v3 übertragen werden. Die drei verschiedenen Wertigkeitsangaben pro Belastbarkeitsmessung sind außerdem den drei erwähnten Steuerleitungen x1 bis x3 individuel zugeordnet, von denen immer eine jeweils ein Initial-Schaltkennzeichen vom Gruppensteuerwerk zum Zähler Z überträgt und dadurch anzeigt, welcher jeweiligen Art und dementsprechend von welchem Umfang die mit dem grade übertragenen Initial-Schaltkennzeichen erwartende und auf das Gruppensteuerwerk zu kommende Arbeitsbelastung zur Verarbeitung der dem Initial-Schaltkennzeichen zugeordneten eintreffenden Informationen ist (s. o. !). In diesem Zusammenhang kann zur Bezeichnung dieser jeweiligen Art von drei verschiedenen Initial-Schaltkennzeichen gesprochen werden, denen die drei Steuerleitungen x1 bis x3 zugeordnet sind. Jedem dieser drei verschiedenen möglichen Initial-Schaltkennzeichen ist je eine der drei Wertigkeitsangaben zugeordnet, von denen der einzelne Wert einer jeden etwas über die Belastbarkeit des betreffenden Steuerwerkes sagt, jeweils unter Bezugnahme auf die mit jedem der eintreffenden Initial-Schaltkennzeichen angezeigte Art und den entsprechenden Umfang von auf das Steuerwerk zu kommender Arbeitsbelastung.

Die drei pro Meßzeitraum ermittelten Wertigkeiten geben nun die Anzahl der Zählschritte pro Vorwärtsschaltung des Zählers an, die bei Eintreffen eines Initial-Schaltkennzeichens vom Zähler auszuführen sind. Die Anzahl der Zählschritte, die der Zähler aufgrund eines Initial-Schaltkennzeichens vorwärtsschaltend ausführt, ist also sowohl vom jeweiligen Initial-Schaltkennzeichen als auch vom jeweiligen Bestimmungsergebnis der Belastbarkeitsmessung abhängig.

Die bereits erwähnte Rückwärtsschaltung des Zählers erfolgt in gleichmäßigen Zeitabständen. Hierzu wird jedem der Zähler von der zentralen Zeitgebereinrichtung r in gleichmäßigen Zeitabständen ein Rückwärtsschaltimpuls zugeführt, bei dem also der Zähler jeweils um einen Schritt rückwärts geschaltet wird.

Es sei nun angenommen, daß dann, wenn der Zähler seinen fünften Zählschritt erreicht, wenn also sein Zählglied z5 markiert ist, Teilnehmeranrufe abgewiesen werden sollen. Das bedeutet also, daß in dieser Betriebssituation Teilnehmer, die an ihrer Teilnehmerstation den Hörer abheben und damit das Anrufsignal abgeben, nicht die Möglichkeit haben sollen, Wählkennzeichen wirksam abzugeben. In einem solchen Betriebszustand ist also das Gruppensteuerwerk dagegen gesperrt, Wählkennzeichen und im Anrufzustand befindliche Teilnehmerstellen rufender Teilnehmer aufzunehmen und abzuspeichern. In Verbindung hiermit kann vorgesehen sein, daß in diesem Betriebszustand denjenigen Teilnehmerstellen, die sich im Anrufzustand befinden, Besetztsignal ausgesendet wird. Die Markierung des Zählgliedes z5 entspricht also hinsichtlich der Vorwärtszählung und der Rückwärtszählung des Zählers einem Grenzwert ; bei dessen Überschreitung durch Vorwärtszählung des Zählers besteht im Zähler ein Überlastkriterium bis zum Wiedererreichen des Grenzwertes durch die einzelnen Schritte der Rückwärtszählung. Dadurch, daß also die Vorwärtszählung aufgrund eines Initial-Schaltkennzeichens einerseits die für das betreffende Gruppensteuerwerk und ebenso für das Zentralsteuerwerk zu erwartende Informationsverarbeitungs-Verkehrsbelastung und andererseits die gegenwärtige Belastbarkeit des zentralen Steuerwerks berücksichtigt, und zwar durch die Anzahl der bei der jeweiligen Vorwärtsschaltung ausgeführten Zählschritte, sowie dadurch, daß die Rückwärtsschaltung des Zählers mit konstanter Geschwindigkeit erfolgt, wird bewerkstelligt, daß eine Aufnahme von Wählkennzeichen durch das Gruppensteuerwerk für einen bestimmten Zeitraum unterbunden ist, der der Verarbeitungszeit der zuletzt aufgenommenen Wählinformationen entspricht. Dieser Zeitraum ist also durch die jeweilige Wertigkeit bestimmt, die für das betreffende Initial-Schaltkennzeichen in dem betreffenden Wertigkeitsspeicherglied (v1, v2 oder v3) gespeichert ist.

In dem Zähler Z findet also eine Kumulation der Initial-Schaltkennzeichen statt. Erreicht der Zähler den Grenzwert, den das Zählglied z5 repräsentiert, so besteht in der Markierung dieses Zählgliedes oder eines zählerwertigen Zählgliedes ein Überlastkriterium. Dieses wird über die Überlastleitung 5 an das Gruppensteuerwerk übertragen. Es wird also zwischen einem zum Erreichen des Grenzwertes führenden Initial-Schaltkennzeichen und einem ersten von ihm zugeordneten Zeichen einer entsprechenden Information, also eintreffenden Wählkennzeichen gebildet und führt dazu, daß diese Zeichen von dem betreffenden Gruppensteuerwerk nicht aufgenommen werden ; zugleich kann die Einschaltung des Besetztsignales für den betreffenden Teilnehmer vorgenommen werden, so daß ihm mittels Hörsignal angezeigt wird, daß eine Abgabe von Wählkennzeichen erfolglos bleibt. Die Übertragung des Überlastkriteriums über die Leitung 5 unterbindet also die Aufnahme von Wählkennzeichen von anrufenden Teilnehmern. Nach einer anderen Version ist vorgesehen, der Übertragung des Überlastkriteriums vom Zähler zum Gruppensteuerwerk die Wirkung zu geben, daß für die Dauer des Bestehens des Überlastkriteriums weitere Initial-Schaltkennzeichen und ihm entsprechende eintreffende Informationen, z. B. Wählkennzeichen nicht angenommen werden, daß aber diejenige Information, deren vorausgehendes Initial-Schaltkennzeichen dazu geführt hat, daß das Überlastkriterium gebildet wurde, noch angenommen wird. In diesem Falle wird also immer dann, wenn ein Initial-Schaltkennzeichen noch angenommen wurde, auch die ihm zugeordnete Information noch angenommen ; nur es werden dann weitere Initialschaltkennzeichen und die ihnen zugeordneten Informationen nicht mehr angenommen.

Wie der Zeichnung Fig. 2 zu entnehmen ist, ist auch noch eine weitere Überlastleitung 7 vorgesehen. Ein Überlastkriterium wird über diese Über-

lastleitung nur übertragen, wenn der Zähler einen entsprechend höheren Zählerstand erreicht. Entsprechendes gilt für die Überlastleitung 10. Es sei nun angenommen, daß ein über die Überlastleitung 5 übertragenes Überlastkriterium dazu dient, das Gruppensteuerwerk zu veranlassen, von anrufenden Teilnehmern keine Wahlkennzeichen anzunehmen, und ein über die Überlastleitung 7 übertragenes Überlastkriterium dazu dient, auch über ankommend belegte Verbindungsleitungen eintreffende Wahlkennzeichen nicht mehr anzunehmen. Da der Zählerstand des Zählers die augenblickliche Belastung des Gruppensteuerwerks anzeigt, wird bei einem dem Zählglied z5 entsprechenden Belastungsgrad die Annahme von Wählkennzeichen von anrufenden Teilnehmern gesperrt, dagegen die Annahme von Wählkennzeichen von ankommend belegten Verbindungsleitungen erst bei einem höheren Belastungszustand. Bei einem noch höheren Belastungszustand kann auch die Annahme von Informationen verhindert werden, die das Gruppensteuerwerk vom Zentralsteuerwerk entgegennehmen soll.

Es ist also festzustellen, daß die Ermittlung der Verkehrsbelastung und die Erkennung von Überbelastungs-Situationen in den Gruppensteuerwerken mittels in oder bei ihm vorgesehenen und die Fälle der Inanspruchnahme des Gruppensteuerwerks erfassenden Zählers erfolgt; die Ermittlung der Verkehrsbelastung und die Erkennung von Überbelastungen erfolgt also an dezentraler Stelle. Zur Abwehr von Informationsüberbelastungen bewirkt das von dem Zähler erzeugte Überlastkriterium über die Überlastleitungen 5 und 7, daß die Inanspruchnahme des Gruppensteuerwerks zwecks Aufnahme von Informationen für diejenigen Durchschaltungen über das Teilkoppelfeld der betreffenden Anschlußgruppe verhindert ist, die solche der ankommenden Art sind. Durchschaltungen vom Koppelfeld K zu einer Verbindungsleitung oder zu einer Teilnehmerleitung können dagegen noch abgewickelt werden, obwohl über die Überlastleitungen 5 und 7 das Überlastkriterium bereits ansteht. Erst wenn das Überlastkriterium auch über die Überlastleitung 10 zum Gruppensteuerwerk übertragen wird, werden auch Durchschaltungen der abgehenden Art nicht mehr ausgeführt, indem bei Erreichen eines solchen Betriebszustandes das betreffende Gruppensteuerwerk gegen die Aufnahme entsprechender Informationen gesperrt ist. Die Überlastleitung 10 dient also zur Übertragung eines Überlastblockierkriteriums durch dasselbe wird nicht nur eine Annahme von Informationen vom Zentralsteuerwerk verhindert, sondern es kann darüber hinaus vorgesehen sein, daß auch eine Abgabe von Informationen an das betreffende Gruppensteuerwerk verhindert ist, insbesondere die Abwicklung von Durchschaltevorgängen innerhalb einer Anschlußgruppe.

Es sei auch noch betont, daß die Ermittlung der Verkehrsbelastung und die Erkennung von Überbelastungs-Situationen in den Gruppensteuerwerken, also in teilzentralen Schalteinrichtungen erfolgt. Den darin vorgesehenen an sich bekannten Zählern werden nicht Überlastsignale zugeführt, sondern Initial-Schaltkennzeichen, die die Vorwärtsschaltung der Zähler entsprechend der jeweiligen Wertigkeit bewerkstelligen. Die Überlastsignale werden also nicht den Zählern zugeführt, sondern von ihnen erzeugt. Die die Verkehrsbelastung betreffenden Steuersignale, die den Zählern zugeführt werden, sind also nicht Überlastsignale, sondern solche Steuersignale, die den Beginn jeweils einer in einem teilzentralen Gruppensteuerwerk empfangenen, in ihm zwischenzuspeichernden und an das zentrale Steuerwerk wieder abzugebenden Informationsportion darstellen. Wie bereits erläutert, sind diese Steuersignale Initial-Schaltkennzeichen. Diese Steuersignale können aber auch auf andere Weise gewonnen werden, und zwar aufgrund des Eintreffens eines ersten Wählkennzeichens einer Serie von Wählkennzeichen.

Die Anwendung der Erfindung ist nicht auf PCM-Fernsprechvermittlungsanlagen beschränkt, sondern kann auch in Fernmeldevermittlungsanlagen in Analogtechnik realisiert werden. Insbesondere in diesem Zusammenhang ist die Möglichkeit gegeben, daß ein Überlastsignal an diejenige verbindungsindividuelle Schalteinrichtung abgegeben wird, über die ein Initial-Schaltkennzeichen eingetroffen ist, welches zum Erreichen des Grenzwertes geführt hat. Das Überlastsignal bewirkt dann, daß die aus Initial-Schaltkennzeichen und Informations-Zeichen bestehenden, zu verarbeitenden Informationen, die in verbindungsindividuellen Schalteinrichtungen eintreffen, von hier nicht weitergegeben werden. Ebensogut ist es auch möglich, ein Überlastsignal in Zuordnung zu einer verbindungsindividuellen Schalteinrichtung an zentraler Stelle zu speichern und auf diese Weise zu bewirken, daß in der betreffenden verbindungsindividuellen Schalteintreffende Informationen nicht angenommen werden.

Ferner besteht die Möglichkeit, daß über eine verbindungsindividuelle Schalteinrichtung, an die ein Übersignal abgegeben wurde, oder für die ein Überlastsignal gespeichert wurde, ein Zeichen, insbesondere ein Hörzeichen ausgesendet wird, welches anzeigt, daß über die betreffende verbindungsindividuelle Schalteinrichtung Informationszeichen nicht empfangen werden. Hierbei handelt es sich vornehmlich um das Besetztzeichen.

Im Gegensatz zu bekannten Anordnungen erfolgt also die Ermittlung der für das zentrale Steuerwerk erwachsenden Informations-Verkehrsbelastung an dezentraler Stelle, und zwar nicht an einer einzigen dezentralen Stelle sondern in allen Gruppensteuerwerken. Hierzu werden die durch die DE-A-3 236 130 an sich bekannten Zähler verwendet. Im Gegensatz zu der darin beschriebenen Technik erfolgt die Ermittlung der Informations-Verkehrsbelastung und die Bildung von Überlastsignalen aber nicht auf andere Weise an zentraler Stelle, und es werden nicht die Überlastsignale von der zentralen Stelle zu den dezentralen Stellen hin übertragen, sondern den Zählern werden Initial-Schaltkennzeichen zugeführt, und die Überlastsignale werden von ihnen erzeugt, statt daß sie ihnen zugeführt werden. Dadurch, daß den Zählern Initial-Schaltkennzeichen zugeführt werden, und zwar an dezentraler Stelle, wird ein Zeitgewinn erzielt, durch eine entsprechend frühzeitige Überlastabwehr möglich ist. Der Überlastfall für ein zentrales Steuerwerk ist also gleichsam vorhersehbar und des können so frühzeitig Abwehrmaßnahmen getroffen werden, daß von vornherein verhindert werden kann, daß der Überlastfall überhaupt eintritt. Für diesen Zeitgewinn wird u. a. der zeitliche Abstand zwischen Initial-Schaltkennzeichen, die den Zählern zugeführt werden, und den den Initial-Schaltkennzeichen individuell zugeordneten Informationen (z. B. eintreffende Wählkennzeichen), die in ihrer Gesamtheit ursächlich sind für die auf das zentrale Steuerwerk zu kommende Informations-Verkehrsbelastung, mitausgenutzt. Ein bestehendes Überlastkriterium führt auch nicht zu einer allgemeinen Zufuhrsperre von Informationen für das zentrale Steuerwerk, sondern führt zur Abwehr einzelner Belegungen, z. B. durch Teilnehmeranruf verursachte Belegungen, die zufallsbedingt über das gesamte Verkehrsgeschehen verteilt sind. Es wird dadurch möglich, die Überlastabwehr sehr präzise zu gestalten und alsbald nach Abarbeitung einer aufgetretenen Verkehrs-Überbelastung die vorübergehend getroffenen Abwehrmaßnahmen wieder unwirksam zu machen. Durch die Maßnahme, daß die Überlastabwehrmaßnahmen sich nicht gleichmäßig auf alle Fälle der Inanspruchnahme der Gruppensteuerwerke auswirken, sondern in der beschriebenen Weise diese Fälle bezüglich ankommender Durchschaltungen und abgehender Durchschaltungen über ein einem Gruppensteuer-Gruppensteuerwerk entsprechendes Teilkoppelfeld unterscheiden, wird erreicht, daß erstens die Überlastabwehrmaßnahmen sehr wirksam sind hinsichtlich der Begrenzung der Informationsverarbeitungs-Verkehrsbelastung, und daß zweitens vermieden wird, daß bereits geleisteter Arbeitsaufwand seitens einer teilzentralen Schalteinrichtung und seitens des zentralen Steuerwerks nachher wieder verworfen werden kann, und zwar wegen Abweisung einer Anforderung einer teilzentralen Gruppensteuerung zur Abwicklung einer abgehenden Durchschaltung, also für einen Verbindungsaufbau, für den bereits Informationsverarbeitung seitens des Gruppensteuerwerkes und seitens des zentralen Steuerwerks geleistet worden ist.

Sehr wesentlich ist in den erläuterten Zusammenhängen die Verwendung der durch die genannte DE-A-3 236 130 bekannten Zähler in einem neuen technischen Zusammenhang. Dadurch, daß diesen Zählern Informationen zugeführt werden, die den jeweiligen Umfang eines Vorwärtsschaltevorganges dieser Zähler nach Maßgabe einer Wertigkeit beeinflussen, die sich sowohl aus der Art der jeweils auf das Gruppensteuerwerk und auf das zentrale Steuerwerk zukommenden Informationsverarbeitungsaufgabe, als auch aus Ergebnissen der tageszeitlich bedingten Informationsverarbeitungs-Belastbarkeit des zentralen Steuerwerks ergeben, wird erreicht, daß die auf das zentrale Steuerwerk zu kommende Verkehrsbelastung hochgradig optimal angepaßt ist an die Leistungsfähigkeit des zentralen Steuerwerkes. Durch Verwendung der an sich bekannten Zähler an dezentraler Stelle steht das jeweilige Maß der momentanen Verkehrsbelastung pro Gruppensteuerwerk immer sofort zur Verfügung. Es ist nicht — wie bekannt — erforderlich, daß jeweils über einen Ermittlungszeitraum hin die eintreffenden Belegungen gezählt werden, wodurch jeweils erst nach Ablauf eines solchen Ermittlungszeitraumes die während desselben aufgetretene Verkehrsbelastung greifbar werden würde, wodurch ein Ergebnis einer solchen Verkehrsbelastungsermittlung immer erst nach einer mittleren Verzugszeit verfügbar wäre, die der Hälfte des Ermittlungszeitraumes entspricht. Diese bekannte Methode der Zählung in aufeinanderfolgenden Ermittlungszeiträumen macht es zudem erforderlich, daß die Ermittlungszeiträume jeweils groß genug gewählt werden müssen im Hinblick auf Zahl und Verteilung der zu zählenden Ereignisse, was bei Anwendung einer solchen bekannten Zählmethode an dezentraler anstatt zentraler Stelle dazu führen würde, daß die Ermittlungszeiträume noch entsprechend größer bemessen werden müßten. Diese Nachteile aber durch das beschriebene Ausführungsbeispiel auch vermieden.

Es kann also vorgesehen sein, daß das in einem Erreichen eines bestimmten Zählerstandswertes bestehende Überlastkriterium dazu führt, daß mit seinem Entstehen zwischen einem Initial-Schaltkennzeichen und den ihm zugehörigen eintreffenden Wahlinformationen eine Aufnahme der letzteren verhindert wird, oder daß diese noch aufgenommen werden, dagegen aber eine Aufnahme eines weiteren Initial-Schaltkennzeichens samt den zugehörigen Wahlinformationen verhindert wird. Beide Varianten sind realisierbar sowohl für den Fall, daß das Überlastkriterium im und vom Gruppensteuerwerk selbst verarbeitet wird, als auch für den Fall, daß es an eine verbindungsindividuelle Schalteinrichtung (z. B. Verbindungssatz) abgegeben wird. Das Überlastkriterium kann darin bestehen, daß ein bestimmtes Zählglied des Zählers Z markiert ist und ein entsprechendes Überlastsignal über eine der Leitungen 5, 7 oder 10 übertragen wird. Ebensogut ist es aber auch möglich, daß das Überlastkriterium dadurch entsteht, daß im umgekehrten Sinne eine entsprechende Zählglied-Markierung gelöscht wird, und daß dadurch eine Annahme weiterer Initial-Schaltkennzeichen bzw. Wahlkennzeichen verhindert ist.

**Patentansprüche**

1. Schaltungsanordnung für Fernmeldeanlagen, insbesondere Fernsprechvermittlungsanlagen, mit zentralen und/oder teilzentralen informationsverarbeitenden Schaltwerken (ZW, GP1, ..., GPn) mit einer hinsichtlich der Informations-Verarbeitungskapazität begrenzten Leistungsfähigkeit, und mit Einrichtungen (M) zur Ermittlung der Informationsverarbeitungs-Verkehrsbelastung jeweils eines Schaltwerkes und zur Erkennung von Informationsverarbeitungs-Verkehrsüberlastungen und mit einer Abwehr solcher Überlastungen dienenden Zählern (Z), die durch die Verkehrsbelastung betreffende Steuersignale beeinflußt einen Grenzwert erreichen und in denen bei Überschreitung eines solchen Grenzwertes aufgrund von von ihnen aufgenommenen Steuersignalen ein zeitlich begrenztes Überlastkriterium besteht und von ihnen zur Überlastabwehr abgegeben wird, dadurch gekennzeichnet, daß die Steuersignale Initial-Schaltkennzeichen, insbesondere Belegungssignale — vorzugsweise Belegungssignale verbindungsindividueller Einrichtungen —, sind, die jeweils im Zusammenhang mit der Durchschaltung eines Teilabschnittes einer herzustellenden Verbindung ein entsprechendes Maß an für das betreffende Schaltwerk (Z) zu erwartender Informationsverarbeitungs-Verkehrsbelastung, insbesondere in Verbindung mit Aufnahme, Verarbeitung und/oder Abgabe von Informationen, signalisieren, daß für die verschiedenen Teilabschnitte durchzuschaltender Verbindungen bestimmte Maße typisch sind, die bei gleichartigen Teilabschnitten gleich, bei verschiedenen Teilabschnitten aber unterschiedlich sind, und daß die den Zählern (Z) zugeführten Initial-Schaltkennzeichen entsprechend den unterschiedlichen Maßen an Schaltwerkbelastung, die jeweils von einem Initial-Schaltkennzeichen signalisiert wird, unterschiedliche Wertigkeiten haben und demgemäß die Zähler (Z) jeweils entsprechend unterschiedlich steuern, und daß bei Überschreitung eines Grenzwertes aufgrund eines von einem Zähler (Z) aufgenommenen Initial-Schaltkennzeichens ein Überlastkriterium durch den Zähler (Z) für einen Zeitraum besteht, dessen Dauer durch die jeweilige Wertigkeit dieses Initial-Schaltkennzeichens bestimmt ist.

2. Schaltungsanordnung nach Anspruch 1, dadurch gekennzeichnet, daß die den Zählern (Z) zugeführten Initial-Schaltkennzeichen jene gemäß der jeweiligen Wertigkeit des betreffenden Initial-Schaltkennzeichens entsprechend viele Schritte (z1-z10) vorwärtsschalten, und daß die jeweilige Dauer des Bestehens des Überlastkriteriums durch den Zeitbedarf für in regelmäßigen Zeitabständen erfolgende Zähler-Rückwärtsschaltvorgänge bis unter den Grenzwert realisiert ist.

## Claims

1. A circuit arrangement for telecommunications systems, in particular telephone exchange systems, comprising central and/or sub-central information-processing switching units (ZW, GP1, ..., GPn) which have a call-handling capacity which is limited in respect of information processing capacity, and comprising devices (M) which serve to determine the information processing traffic load of each switching unit and to recognise information processing traffic overloads, and comprising counters (Z) which serve to avert such overloads and which, under the influence of control signals relating to the traffic load, reach a limit value and in which, when such a limit value is overshot as a result of received control signals, a time limited overload criterion occurs and is emitted in order to avert an overload, characterised in that the control signals comprise initial switching characteristics, in particular availability signals — preferably availability signals of connection-individual devices — which, in the switch-through of a sub-section of a connection to be established, signal a corresponding levels of the information processing traffic load which is likely to occur for the switching unit (Z) in question, in particular in association with the reception, processing and/or emission of items of information, that specific levels are typical for the various sub-sections of connections which are to be switched through, where said levels are identical in the case of identical sub-sections, but different in the case of different sub-sections and that the initial switching characteristics which are supplied to the counters (Z) have different values in accordance with the different levels of switching unit loading signalled by an initial switching characteristic and thus each control the counters (Z) in an appropriately differing fashion, and that when a limit value is overshot by an initial switching characteristic received by a counter (Z), an overload criterion is formed by the counter (Z) for a period of time whose duration is governed by the respective value of this initial switching characteristic.

2. A circuit arrangement as claimed in claim 1, characterised in that the initial switching characteristics which are supplied to the counters (Z) step on the counters in accordance with the respective value of the respective initial switching characteristic by a corresponding number of steps ($z1$, $z10$) and that the respective duration of the overload criterion is governed by the time required for the regular time interval stepping back of the counter to below the limit value.

## Revendications

1. Montage pour des installations de télécommunications, notamment pour des centraux téléphoniques, comportant des unités de commutation (VW, GP1, ..., GPn) centrales et/ou partiellement centrales, traitant les informations et possédant une capacité potentielle limitée en ce qui concerne la capacité de traitement des informations, et comportant des dispositifs (M) servant à déterminer la charge en trafic de traitement d'informations des différentes unités de commutation et pour identifier des surcharges du trafic de traitement d'informations et des compteurs (Z), qui sont utilisés pour lutter contre de telles surcharges et qui atteignent une valeur limite sous l'influence de la charge en trafic de signaux de commande considérés et dans lesquels, lors d'un dépassement d'une telle valeur limite sur la base de signaux de commande reçus par ces compteurs, il existe un critère de surcharge limité dans le temps, qu'ils délivrent pour combattre les surcharges, caractérisé par le fait que les signaux de commande sont des indicatifs initiaux de commutation, notamment des signaux d'occupation — de préférence des signaux d'occupation de dispositifs prévus individuellement pour les liaisons —, qui signalent respectivement en liaison avec l'interconnexion directe d'une section partielle d'une liaison devant être établie, un degré correspondant de la charge en trafic de traitement d'informations, à laquelle il faut s'attendre pour l'unité de commutation (Z) considérée, notamment en liaison avec la réception, le traitement et/ou la délivrance d'informations, que des degrés déterminés, qui sont identiques pour des sections partielles de même type, mais sont différentes pour différentes sections partielles, sont typiques pour les différentes sections partielles de liaison devant être interconnectées, et que les indicatifs initiaux de commutation envoyés aux compteurs (Z) possèdent des valeurs différentes conformément aux degrés différents de charge des unités de commutation, qui est signalé respectivement par un indicatif initial de commutation, et commandent par conséquent les compteurs (Z) respectivement d'une manière différente correspondante et que dans le cas du dépassement d'une valeur limite sur la base d'un indicatif initial de commutation reçu par un compteur (Z), un critère de surcharge délivré par le compteur (Z) est présent pendant un intervalle de temps dont la durée est déterminée par la valeur respective de cet indicatif initial de commutation.

2. Montage suivant la revendication 1, caractérisé par le fait que les indicatifs initiaux de commutation envoyés aux compteurs (Z) font avancer chaque compteur conformément à la valeur respective de l'indicatif initial de commutation considéré, sur un nombre de pas correspondant (z1-z10), et que la durée respective de l'existence du critère de surcharge est fournie par le besoin du point de vue temps requis pour les processus de comptage régressif des compteurs, qui s'effectuent pendant des intervalles de temps réguliers, jusqu'au-dessous de la valeur limite.

# FIG 1

# FIG 2